# EUROPEAN PATENT APPLICATION

(11) **EP 2 039 587 A1**
(43) Date of publication of application: **25.03.2009**
(21) Application number: 08721021.7
(22) Date of filing: 28.02.2008
(51) Int. Cl.: B62D 1/20, B62D 1/19, F16D 1/04

(54) **STEERING DEVICE**

(30) Priority: 15.03.2007 JP 2007066033
(71) Applicant: NSK Ltd., Tokyo 141-8560 (JP)
(72) Inventor: The designation of the inventor has not yet been filed
(74) Representative: Grünecker, Kinkeldey, Stockmair & Schwanhäusser Anwaltssozietät
(86) International application number: PCT/JP2008/053572
(87) International publication number: WO 2008/111405

(57) **Abstract**

To provide a steering apparatus which can ensure the transmission of rotational torque of a steering shaft even when weld joining between a shaft and a shaft coupling is insufficient.

An extension shaft 4 is inserted from the other end 512 of a joining tubular portion 51, so that male serrations 41 formed on the extension shaft 4 are brought into engagement with female serrations 52 and a shank portion 42 of the extension shaft 4 is tightly fitted in a fitting hole 53. Next, the other end 512 of the joining tubular portion 51 and an outer circumference of the shank portion 42 of the extension shaft are welded to be joined together, so as to form a weld joining portion 56. Following this, a male intermediate shaft 16A is coupled to a shaft coupling 5 which is joined integrally with the extension shaft 4.

## Description

### Technical Field

The present invention relates to a steering apparatus and more particularly to a steering apparatus having a shaft coupling which connects together shafts which transmit rotation of a steering shaft of the steering apparatus.

### Background Art

In a steering apparatus for steering front road wheels of a vehicle, the movement of a steering shaft which rotates by manipulation of a steering wheel is transmitted to an input shaft of a steering gear via a universal joint.

In a steering apparatus like this, when shafts which are such as an intermediate shaft and a pinion shaft and are to be coupled to universal joints lie apart from the universal joints due to a layout of a vehicle body, an extension shaft and a shaft coupling are used to connect between the universal joint and the intermediate shaft or the universal joint and the pinion shaft.

In a conventional shaft coupling, a joining tubular portion is made by bending a sheet material into a substantially cylindrical shape. After an extension shaft has been press fitted in this joining tubular portion, the extension shaft is welded to the joining tubular portion. Next, after male serrations on the intermediate shaft are brought into serration-engagement with female serrations on the joining tubular portion, the joining tubular portion is fastened by a bolt so as to contract diameter of the female serrations, whereby the joining tubular portion and the intermediate shaft are coupled together.

In the conventional shaft coupling that has been described above, when the extension shaft is press fitted in an inner circumferential surface of the joining tubular portion, a slit of the joining tubular portion made by bending the sheet material is opened, and the diameter of the joining tubular portion is expanded. Consequently, if the welding between the joining tubular portion and the extension shaft is insufficient, the joining rigidity between the joining tubular portion and the extension shaft is reduced, and this makes it difficult for the steering shaft to transmit the rotational torque properly.

Patent Document No. 1 discloses a shaft coupling which is a shaft coupling in which a joining tubular portion is made by bending a sheet material into a substantially cylindrical shape. In the shaft coupling in Patent Document No. 1, male serrations on a shaft, which constitutes one member, are brought into engagement with female serrations on an inner circumferential surface of the shaft coupling, and a cylindrical end portion of a universal joint, which constitutes the other member, is press fitted on an outer circumferential surface of the shaft coupling.

Consequently, since only a diameter of a joining tubular portion which is made by bending a sheet material is contracted, even though the cylindrical end portion of the universal joint is press fitted on the outer circumferential surface of the shaft coupling, the joining rigidity between the joining tubular portion and the cylindrical end portion of the universal joint is not reduced. Thus, whereby there is caused no problem with transmission of rotational torque of the steering shaft. However, the shaft coupling disclosed in Patent Document No. 1 cannot be applied to a shaft coupling in which shafts are coupled to both ends of an inner circumferential surface of a joining tubular portion.

Patent Document No. 1: US 2005/0140130

### Disclosure of the Invention

### Problem that the Invention is to Solve

A problem that the invention is to solve is to provide a steering apparatus having a shaft coupling in which shafts are coupled to both ends of an inner circumferential surface of a joining tubular portion which can ensure the transmission of rotational torque of a steering shaft even when welding joints between the shafts and the shaft coupling are insufficient.

### Means for Solving the Problem

The problem will be solved by the following means. Namely, according to a first invention, there is provided a steering apparatus including:
a shaft coupling having a joining tubular portion formed by bending a sheet material;
a non-circular inner circumferential surface formed on the joining tubular portion so as to extend from one end to the vicinity of the other end in an axial direction of the joining tubular portion;
a bolt which contracts the non-circular inner circumferential surface of the joining tubular portion;
a first shaft which includes a non-circular outer circumferential surface which is inserted into the non-circular inner circumferential surface of the joining tubular portion from the one end in the axial direction of the joining tubular portion and is brought into engagement with the non-circular inner circumferential surface of the joining tubular portion for transmitting rotational torque of a steering shaft;
a second shaft which includes a non-circular outer circumferential surface which is inserted into the non-circular inner circumferential surface of the joining tubular portion from the other end in the axial direction of the joining tubular portion and is brought into engagement with the non-circular inner circumferential surface of the joining tubular portion for transmitting the rotational torque of the steering shaft and
a weld joining portion which joins together the second shaft and the joining tubular portion.

According to a second invention, there is provided a steering apparatus as set forth in the first invention, wherein the non-circular inner circumferential surface of the joining tubular portion is female serrations and the non-circular outer circumferential surfaces of the first and second shafts are male serrations, respectively.

According to a third invention, there is provided a steering apparatus as set forth in the first invention, wherein the non-circular inner circumferential surface of the joining tubular portion and the non-circular outer circumferential surfaces of the first and second shafts are a pair of flat surfaces which are substantially parallel to each other.

According to a fourth invention, there is provided a steering apparatus as set forth in the first invention further including:
a fitting hole which is formed in the joining tubular portion at the other end in the axial direction of the joining tubular portion and
a shaft portion which is formed on the outer circumferential surface of the second shaft so as to tightly fit in the fitting hole.

According to a fifth invention, there is provided a steering apparatus as set forth in the first invention, the first shaft sis an intermediate shaft and the second shaft is an extension shaft.

According to a sixth invention, there is provided a steering apparatus as set forth in the first invention, the first shaft is a pinion shaft and the second shaft is an extension shaft.

### Advantage of the Invention

In the steering apparatus of the invention, the first shaft has the non-circular inner circumferential surface in the joining tubular portion of the shaft coupling so as to extend from the one end to the vicinity of the other end in the axial direction of the joining tubular portion and the non-circular outer circumferential surface which is brought into engagement with the non-circular inner circumferential surface of the joining tubular portion which is contracted diametrically for transmission of rotational torque. The first shaft is inserted from the one end in the axial direction of the joining tubular portion. The second shaft having the non-circular outer circumferential surface which is brought into engagement with the non-circular inner circumferential surface of the joining tubular portion for transmission of rotational torque is inserted from the other end in the axial direction of the joining tubular portion. The second shaft and the joining tubular portion are joined together at the weld joining portion.

Consequently, since the second shaft is joined to the joining tubular portion by the weld joining portion and also the engagement between the non-circular outer circumferential surface of the second shaft and the non-circular inner circumferential surface of the joining tubular portion, even though the weld joining is insufficient, the transmission of rotational torque can be ensured. Thus, the safety of the steering apparatus is increased.

### Brief Description of the Drawings

Fig.1 is an overall front view of a steering apparatus including a shaft coupling of Embodiment 1 of the invention;
Figs. 2A through 2C show component diagrams showing the shaft coupling of Embodiment 1 of the invention, Fig.2A is a sectional view taken along the line A-A in Fig.2B, Fig.2B is a partially sectioned front view of the shaft coupling and Fig.2C is a sectional view taken along the line B-B in Fig.2B;
Figs. 3A through 3C show joined states of the shaft coupling of Embodiment 1 of the invention with shafts, Fig.3A is a component diagram showing an extension shaft which is to be joined to the shaft coupling, Fig.3B is a partially sectioned front view showing a joined state in which the extension shaft is joined to the shaft coupling and Fig.3C is a sectional view showing a state in which the extension shaft and an intermediate shaft are joined to the shaft coupling;
Figs. 4A and 4B show component diagrams, Fig. 4A is a left side view of Fig.4B and Fig.4C is front view of the shaft coupling;
Figs. 5A through 5B show component diagrams of an extension shaft which is to be joined to a shaft coupling of Embodiment 2, Fig.5A is a left side view of Fig.5B and Fig.5B is a front view of the extension shaft;
Figs. 6 shows a joined state between the shaft coupling of Embodiment 2 of the invention and a shaft, Fig.6A is a front view showing a state in which the extension shaft is joined to the shaft coupling, Fig.6B is a sectional view taken along the line C-C in Fig.6A, and Fig.6C is a sectional view taken along the line D-D in Fig.6A and
Fig.7 is a front view showing a state in which the extension shaft and an intermediate shaft are joined to the shaft coupling of Embodiment 2 of the Invention.

### Description of Reference Numerals

- 11: steering wheel
- 12: steering shaft
- 12A: female steering shaft
- 12B: male steering shaft
- 13: steering column
- 13A: outer column
- 13B: inner column
- 14: support bracket
- 15: universal joint (upper universal joint)
- 16: intermediate shaft
- 16A: male intermediate shaft
- 16B: female intermediate shaft
- 17: universal joint (lower universal joint)
- 18: vehicle body
- 20: assist unit
- 21: gear housing
- 23: output shaft
- 26: electric motor
- 261: casing
- 30: steering gear
- 31: pinion shaft
- 32: tie rod
- 4: extension shaft
- 41: male serration
- 42: shaft portion
- 43A, 43B: flat surface
- 5: shaft coupling
- 511: one end
- 512: other end
- 52: female serration
- 53: fitting hole
- 54A, 54B: flange portion
- 541A: bolt hole
- 541B: female thread
- 55: slit
- 56: weld joining portion
- 61: male serration
- 62: annular groove
- 63A, 63B: flat surface
- 64: groove
- 7: shaft coupling
- 71: U-shaped joining tubular portion
- 711: left end
- 72: cylindrical joining tubular portion
- 721: fitting hole
- 722: slit
- 723: right end
- 73A, 73B: flange portion
- 731A, 731B: flat surface
- 732A, 732B: bolt hole
- 74: coupling portion
- 75: opening
- 76: weld joining portion
- 81: bolt
- 82: bolt

### Best Mode for Carrying out the Invention

Hereinafter, Embodiment 1 and Embodiment 2 of the invention will be described based on the drawings.

### Embodiment 1

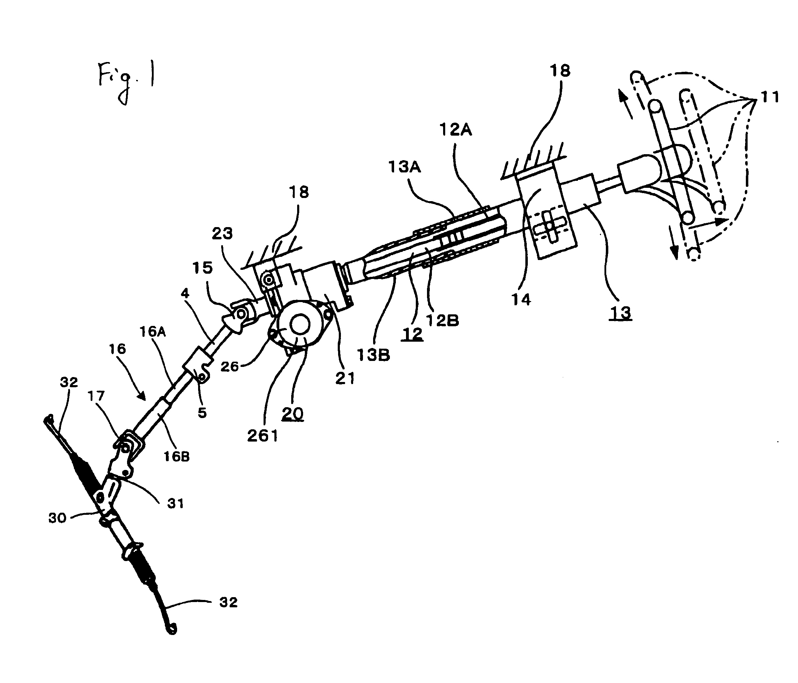

Fig.1 is an overall front view of a steering apparatus having a shaft coupling of Embodiment 1 of the invention. As shown in Fig.1, a steering apparatus including a shaft coupling of Embodiment 1 of the invention includes a steering shaft 12 to which a steering wheel 11 can be attached at a vehicular rear side (a right-hand side of Fig.1), a steering column 13 through which the steering shaft 12 is inserted, an assist unit (a steering assist part) 20 for imparting assist torque to the steering shaft 12 and a steering gear 30 which is coupled to the steering shaft 12 at a vehicular front side (a left-hand side of Fig.1) via a rack and pinion mechanism (not shown).

The steering shaft 12 includes a female steering shaft 12A and a male steering shaft 12B which are spline fitted together so as to transmit rotational torque and also to move relatively with respect in an axial direction. Consequently, the female steering shaft 12A and the male steering shaft 12B can move relatively at the spline fitting portion so as to reduce an overall length of the steering shaft 12 at the time of collision.

In addition, the steering column 13, through which the steering shaft 12 is inserted, includes an outer column 13A and an inner column 13B which are combined together so as to move in a telescopic fashion so as to provide a so-called collapsible construction in which an overall length of the steering column 13 is contracted while absorbing impact energy when axial impact is applied thereto at the time of collision.

In addition, a vehicular front end portion of the inner column 13B is press fitted to be fixed in a vehicular rear end portion of the gear housing 21. In addition, a vehicular front end portion of the male steering shaft 12B is inserted into an inside of the gear housing 21 so as to be coupled to the vehicular rear end side of an input shaft (not shown) of an assist unit 20.

The steering column 13 is supported swingably on part of the vehicle body 18 such as a lower surface of a dashboard by a support bracket 14 at an intermediate portion thereof. In addition, a locking portion (not shown) is provided between the support bracket 14 and the vehicle body 18, and when impact is applied to the support bracket 14 in a direction towards the vehicular front side, the support bracket 14 is made to be disengaged from the locking portion to move towards the vehicular front side.

In addition, an upper end portion of the gear housing 21 is also supported swingably on part of the vehicle body 18. In addition, in this embodiment, by providing a tilting mechanism and a telescoping mechanism, the steering wheel 11 is made to be adjusted freely as indicated by arrows in Fig.1 with respect to longitudinal and height positions of the vehicle body. Since these tilting mechanism and telescoping mechanism have been well known conventionally and do not constitute characteristic portions of the invention, the detailed description thereof will be omitted here.

An output shaft 23 which projects from a front side end face of the gear housing 21 is coupled to a rear end portion of an intermediate shaft 16 via a universal joint (an upper universal joint) 15, an extension shaft 4 joined to the universal joint 15 and a shaft coupling 5 joined to the extension shaft 4.

In addition, a pinion shaft (hereinafter, referred to as a shaft) 31 of the steering gear 30 is coupled to a front end portion of the intermediate shaft 16 via another universal joint (a lower universal joint) 17. The intermediate shaft 16 is made up of a male intermediate shaft (a male shaft) 16A and a female intermediate shaft (a female shaft) 16B which are fitted together in so that a vehicular rear end portion of the female intermediate shaft 16B fits on a vehicular front end portion of the male intermediate shaft 16A so as to transmit rotational torque and also to move relatively with respect to an axial direction.

A pinion (not shown) is formed at a lower end (a vehicular front end portion) of the pinion shaft 31. In addition, a rack (not shown) is made to mesh with this pinion, whereby the rotation of the steering wheel 11 moves tie rods 32 to thereby steer road wheels, not shown.

A casing 261 of an electric motor 26 is fixed to the gear housing 21 of the assist unit 20, and a worm is joined to a rotational shaft (not shown) of the electric motor 26. A worm wheel (not shown) is attached to the output shaft 23 and the worm on the rotational shaft of the electric motor 26 is made to mesh with the worm wheel.

In addition, a torque sensor (not shown) is provided on the periphery of an intermediate portion of the output shaft 23. Direction and magnitude of torque applied to the steering shaft 12 from the steering wheel 11 are detected by the torque sensor and the electric motor 26 is actuated in accordance with the detected values. Then, a predetermined magnitude of assist torque in a predetermined direction is generated in the output shaft 23 via a reduction mechanism having the worm and the worm wheel. The assist unit generating assist torque is not limited to the electric type but a hydraulic assist unit may be adopted.

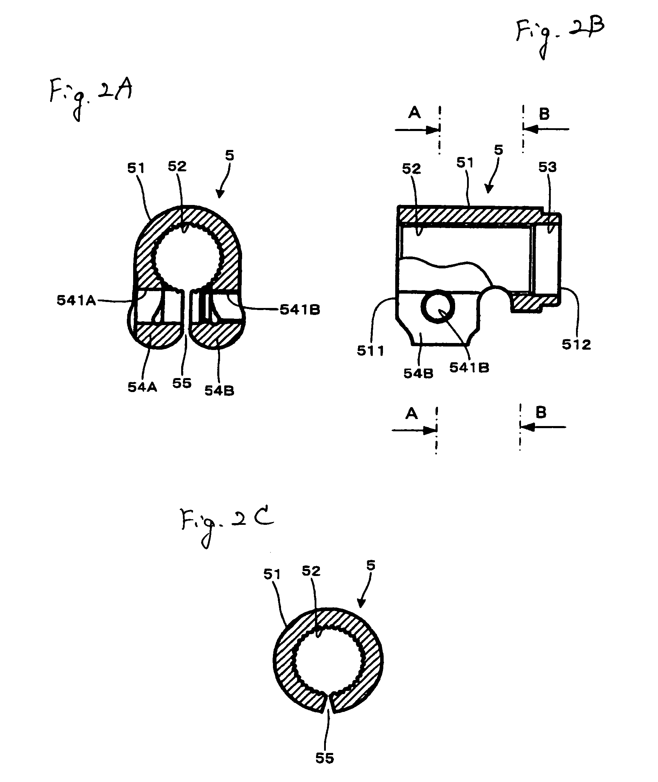

Figs. 2 to 3 show a shaft coupling of Embodiment 1 of the invention. Figs. 2A through 2C show component diagrams showing the shaft coupling of Embodiment 1 of the invention. Fig.2A is a sectional view taken along the line A-A in Fig.2B, Fig.2B is a partially sectioned front view of the shaft coupling and Fig.2C is a sectional view taken along the line B-B in Fig.2B.

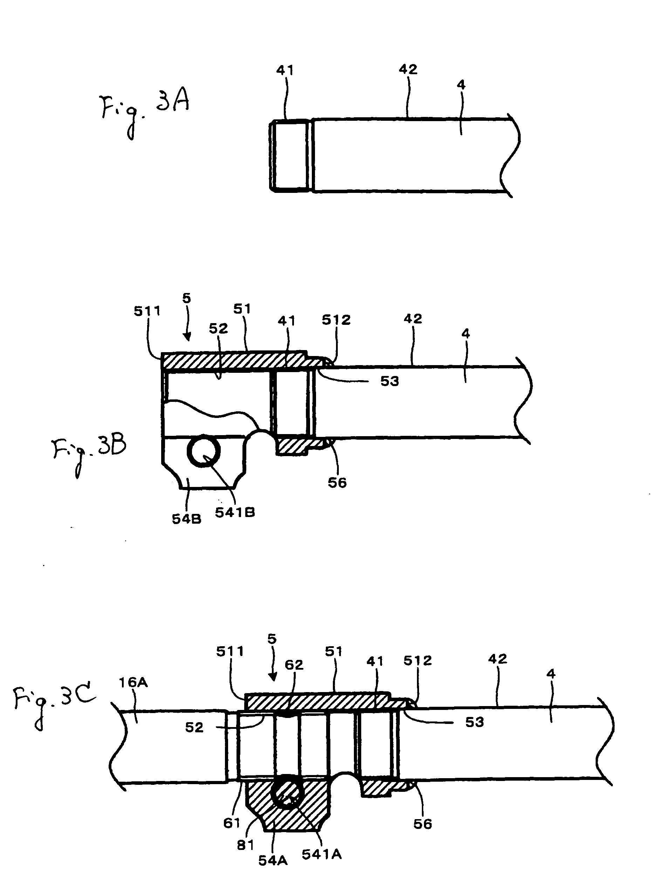

Fig.3 shows joined states of the shaft coupling of Embodiment 1 of the invention with shafts. Fig.3A is a component diagram showing the extension shaft which is to be joined to the shaft coupling, Fig.3B is a partially sectioned front view showing a joined state in which the extension shaft is joined to the shaft coupling and Fig.3C is a sectional view showing a state in which the extension shaft and the intermediate shaft are joined to the shaft coupling.

The shaft coupling of Embodiment 1 of the invention will be described based on an example in which the shaft coupling is applied to a joining portion between the extension shaft (the second shaft) 4 and the male intermediate shaft (the first shaft) 16A which are shown in Fig.1.

As shown in Fig.2, in the shaft coupling 5 of Embodiment 1 of the invention, a joining tubular portion 51 is formed by bending a sheet material into a substantially circular cylindrical shape, and female serrations 52 as the non-circular inner circumferential surface are formed on an inner circumferential surface of the joining tubular portion 51. The female serrations 52 are formed so as to extend from one end (a left end in Fig.2A) 511 in an axial direction of the joining tubular portion 51 to the vicinity of the other end (a right end in Fig.2B) 512 in the axial direction thereof.

A fitting hole 53 which is larger in diameter than the female serrations 52 is formed concentrically with the female serrations 52 on an inner circumferential surface of the other end 512 in the axial direction of the joining tubular portion 51. A pair of left and right flange portions 54A, 54B is formed on the joining tubular portion 51. The pair of the left and right flange portions 54A, 54B first extends from the joining tubular portion 51 in a tangential direction (downward as viewed in Fig.2A) and are thereafter folded back inwards.

The flange portions 54A, 54B are formed to extend from the one end 511 of the joining tubular portion 51 and a length thereof is substantially a half an axial length of the joining tubular portion 51. A slit 55 is formed between the flange portions 54A, 54B which communicates with the female serrations 52. The slit 55 is formed to extend as far as the other end 512 of the joining tubular portion 51 (refer to Fig.2C).

In addition, a bolt hole 541A is formed in the flange portion 54A so as to penetrate the flange portion 54A in a horizontal direction as viewed in Fig.2A (a direction perpendicular to an axial center of the joining tubular portion 51). In addition, a female thread 541B is formed in the flange portion 54B so as to penetrate the flange portion 54B coaxially with the bolt hole 541A. When a bolt (not shown) is inserted into the bolt hole 541A from a left-hand side of Fig.2A and is screwed into the female thread 541B, the flange portions 54A, 54B are elastically deformed, and the width of the slit 55 is narrowed. Thus, the diameters of the female serrations 52 are contracted.

As shown in Fig.3A, male serrations 41 which can be brought into serration-engagement with the female serrations 52 are formed on an outer circumferential surface of a left end of the extension shaft 4 (the second shaft). In addition, a shank portion 42 whose cross section is circular is formed on the extension shaft 4 from a right end of the male serrations 41. The shank portion 42 is larger in diameter than the male serrations 41 and has a diameter enabling itself to tightly fit in the fitting hole 53 and

As shown in Fig.3B, the extension shaft 4 is inserted from the other end 512 of the joining tubular portion 51 so that the male serrations 41 formed on the extension shaft 4 are brought into serration-engagement with the female serrations 52, and the shank portion 42 of the extension shaft 4 is tightly fitted in the fitting hole 53.

Next, the other end 512 of the joining tubular portion 51 and an outer circumference of the shank portion 42 of the extension shaft 4 are welded to be joined together, so as to form a weld joining portion 56. Following this, the male intermediate shaft 16A (the first shaft) is coupled to the shaft coupling 5 which is joined integrally to the extension shaft 4.

As shown in Fig.3C, male serrations 61 which can be brought into serration-engagement with the female serrations 52 are formed on an outer circumference of a right end of the male intermediate shaft 16A. In addition, a semicircular annular groove 62 is formed on the male intermediate shaft 16A in an intermediate position along the axial length of the male serrations 61.

The male intermediate shaft 16A is inserted from the one end 511 of the joining tubular portion 51, so that the male serrations 61 formed on the male intermediate shaft 16A are brought into serration-engagement with the female serrations 52. Thereafter, when a bolt 81 is inserted into the bolt hole 541A to be screwed into the female thread 541B, the flange portions 54A, 54B are elastically deformed and the width of the slit 55 is narrowed. Thus, the diameters of the female serrations 52 are contracted.

When the diameter of the female serrations 52 are contracted, the male serrations 61 of the male intermediate shaft 16A are fastened strongly to the female serrations 52. In addition, an outer circumference of the bolt 81 which is screwed into the shaft coupling 5 is brought into engagement with the semicircular annular groove 62 of the male intermediate shaft 16A. Consequently, even though a force is exerted in a direction in which the male intermediate shaft 16A is pulled out of the shaft coupling 5 (a leftward direction as viewed in Fig. 3C), since the annular groove 62 is brought into abutment with an outer circumference of the bolt 81, the male intermediate shaft 16A is held in a predetermined axial built-in position relative to the shaft coupling 5. Accordingly, the male intermediate shaft 16A is prevented from being dislocated from the shaft coupling 5.

In Embodiment 1, since the extension shaft 4 is joined to the joining tubular portion 51 by the weld joining portion 56 and also the serration-engagement, even though the weld joining is insufficient, the rotational torque of the steering shaft 12 is surely transmitted through the serration-engagement. Therefore, the safety of the steering apparatus is enhanced.

### Embodiment 2

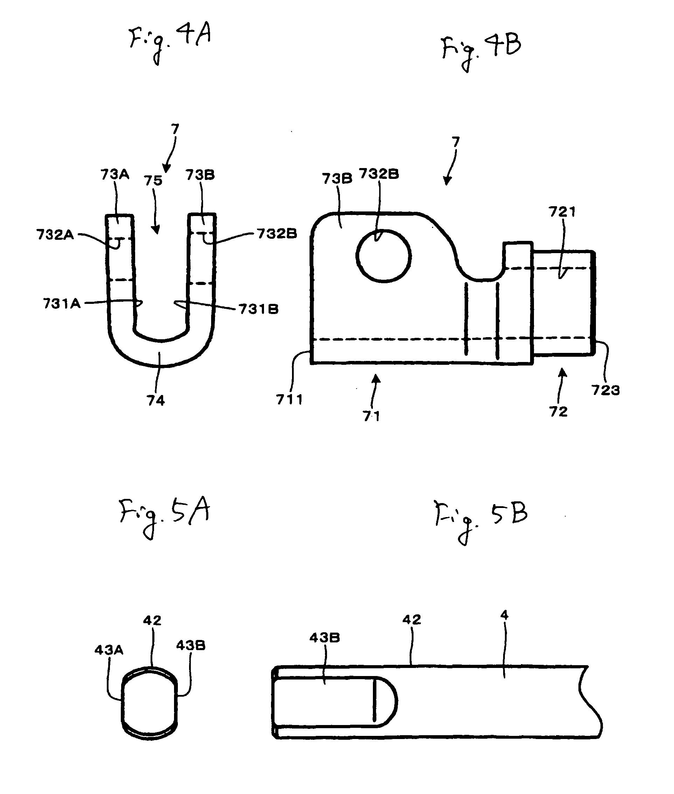

Next, Embodiment 2 of the invention will be described. Figs.4A and 4B show component diagrams showing a shaft coupling of Embodiment 2 of the invention. Fig.4A is a left side view of Fig.4B and Fig.4B is a front view of the shaft coupling. Figs.5A and 5B show component diagrams of an extension shaft which is joined to the shaft coupling of Embodiment 2. Fig.5A is a left side view of Fig.5B and Fig.5B is a front view of the extension shaft.

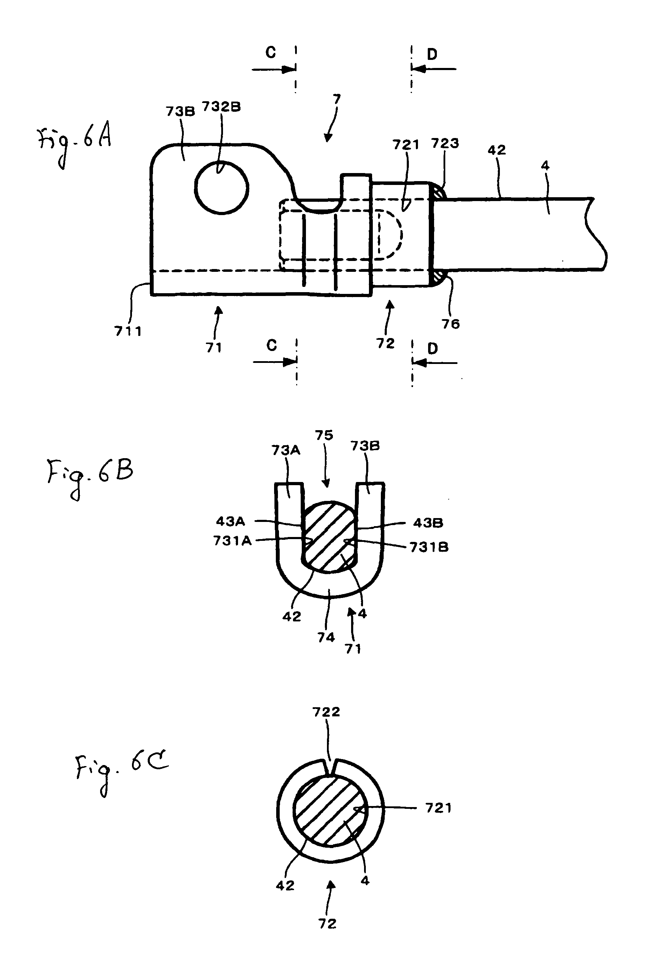

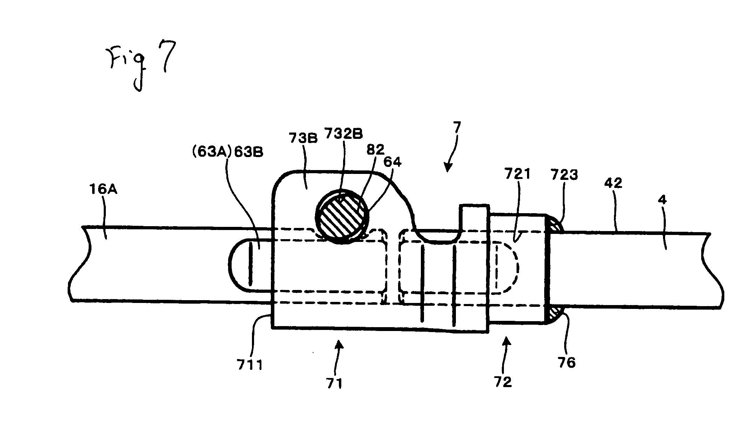

Figs.6A through 6C show a joined state of the shaft coupling of Embodiment 2 of the invention with the shaft. Fig.6A is a front view showing a state in which the extension shaft is joined to the shaft coupling, Fig.6B is a sectional view taken along the line C-C in Fig.6A and Fig.6C is a sectional view taken along the line D-D in Fig. 6A. Fig.7 is a front view showing a state in which the extension shaft and an intermediate shaft are joined to the shaft coupling of Embodiment 2 of the invention. In the following description, only structural portions and their functions which differ from those of Embodiment 1 will be described, so that repeated descriptions will be omitted.

While in Embodiment 1, the female serrations are formed on the inner circumferential surface of the joining tubular portion as the non-circular inner circumferential surface, Embodiment 2 represents a case where a pair of flat surfaces which are substantially parallel is formed as a non-circular inner circumferential surface.

As shown in Fig.4, a shaft coupling 7 of Embodiment 2 of the invention is made by bending a sheet material, and as viewed in Fig.4(2), a joining tubular portion 71 having a U-shaped cross section is formed on a left-hand side, and a cylindrical joining tubular portion 72 is formed integrally on a right-hand side of the U-shaped joining tubular portion 71.

The U-shaped joining tubular portion 71 includes flange portions 73A, 73B which constitute substantially parallel portions of the U shape and an arc-shaped connecting portion 74 which connects lower ends of the flange portions 73A, 73B. The flange portions 73A, 73B form an opening 75 on an opposite side to the connecting portion 74 (an upper side in Fig.4).

As shown in Fig.4A, in the flange portions 73A, 73B which are disposed substantially parallel to each other and spaced apart from each other, flat surfaces 731A, 731B are formed, respectively, on inner circumferential surfaces of the flange portions 73A, 73B as non-circular inner circumferential surfaces. In addition, circular bolt holes 732A, 732B are formed, respectively, in the flange portions 73A, 73B in a horizontal direction as viewed in Fig.4A (a direction perpendicular to an axial center of the joining tubular portions 71, 72) so as to penetrate the respective flange portions 73A, 73B coaxially.

A circular fitting hole (refer to Fig.6C) 721 is formed in an inner circumferential surface of the joining tubular portion 72 concentrically with the joining tubular portion 72. A slit 722 is formed in the joining tubular portion 72 which communicates with the opening 75, as well as the fitting hole 721. The slit 722 is formed to extend as far as a right end 723 of the joining tubular portion 72.

When a bolt (not shown) is inserted into the bolt hole 732A from a left-hand side of Fig.4A and is screwed into a nut from a right-hand side of Fig.4A, the flange portions 73A, 73B are elastically deformed, and a gap between the flat surfaces 731A, 731B is narrowed.

As shown in Fig.5, a shank portion 42 having a circular cross section is formed on an outer circumferential surface of a left end of the extension shaft 4 (the second shaft) so as to have a diametric dimension which allows itself to fit tightly in the fitting hole 721. In addition, an outer circumferential surface of a left end of the shank portion 42 has a substantially oval shape, and a pair of parallel flat surfaces 43A, 43B which can be brought, respectively, into engagement with the flat surfaces 731A, 731B are formed thereon.

As shown in Fig.6A, the extension shaft 4 is inserted from the right end 723 of the joining tubular portion 72, so that the flat surfaces 43A, 43B which are formed on the extension shaft 4 are brought, respectively, into engagement with the flat surfaces 731A, 731B and that the shank portion 42 of the extension shaft 4 is tightly fitted in the fitting hole 721.

Next, the right end 723 of the joining tubular portion 72 and an outer circumference of the shank portion 42 of the extension shaft 4 are welded to be joined together, so as to form a weld joining portion 76. Following this, a male intermediate shaft (a first shaft) 16A is coupled to the shaft coupling 7 which is joined integrally with the extension shaft 4.

As shown in Fig.7, a pair of parallel flat surfaces 63A, 63B (in Fig.7, only one flat surface 63B is shown) are formed on an outer circumferential surface at a right end of the male intermediate shaft 16A which can be brought into engagement with the flat surfaces 731A, 731B, respectively. In addition, a semicircular groove 64 is formed in an upper position on the outer circumferential surface of the male intermediate shaft 16A at axially intermediate position.

The male intermediate shaft 16A is inserted from a left end 711 of the joining tubular portion 71, and the pair of flat surfaces 63A, 63B which are formed on the male intermediate shaft 16A are brought into engagement with the flat surfaces 731A, 731B, respectively. Thereafter, when a bolt 82 is inserted into the bolt holes 732A, 732B of the shaft coupling 7 and a nut (not shown) is screwed on to the bolt 82, the flange portions 73A, 73B are elastically deformed, and a gap between the flat surfaces 731A, 731B is narrowed.

When the gap between the flat surfaces 731A, 731B is narrowed, the flat surfaces 63A, 63B of the male intermediate shaft 16A are fastened tightly by the flat surfaces 731A, 731B. In addition, an eccentric outer circumferential surface of the bolt 82 which has been inserted into the shaft coupling 7 is brought into engagement with the semicircular groove 64 of the male intermediate shaft 16A. Consequently, even though a force is exerted in a direction (a leftward direction as viewed in Fig.7) in which the male intermediate shaft 16A is pulled out of the shaft coupling 7, since the groove 64 is brought into abutment with the outer circumference of the bolt 82, the male intermediate shaft 16A is held in a predetermined axial built-in position relative to the shaft coupling 7 and also is prevented from being dislocated from the shaft coupling 7.

In Embodiment 2, the extension shaft 4 is joined to the joining tubular portion 72 by the weld joining portion 76 and also the engagement between the flat surfaces 43A, 43B and the flat surfaces 731A, 731B. Consequently, even though the weld joining is insufficient, since the transmission of rotational torque of the steering shaft 12 can be ensured by the engagement between the flat surfaces 43A, 43B and the flat surfaces 731A, 731B, the safety of the steering apparatus is enhanced.

While in the embodiments described heretofore, the non-circular circumferential surface has been described as being made up of the female serrations and the male serrations which can be brought into engagement with each other and the pair of flat surfaces which are substantially parallel to each other, rotational torque may be made to be transmitted via spline engagement or any non-circular cross sections.

In addition, while in the embodiments, the invention has been described as being applied to the joining portion with the extension shaft 4 and the intermediate shaft 16, the invention can be applied to a joining portion of any shafts of the steering shafts such as a joining portion with the extension shaft and a pinion shaft 31.

Note that the subject patent application is based on the Japanese patent application (No. 2007-066033) filed on March 15, 2007 and the contents thereof are to be incorporated herein in its entirety by reference.

## Claims

1. A steering apparatus comprising:
a shaft coupling having a joining tubular portion formed by bending a sheet material;
a non-circular inner circumferential surface formed on the joining tubular portion so as to extend from one end to the vicinity of the other end in an axial direction of the joining tubular portion;
a bolt which contracts the non-circular inner circumferential surface of the joining tubular portion;
a first shaft which comprises a non-circular outer circumferential surface which is inserted into the non-circular inner circumferential surface of the joining tubular portion from the one end in the axial direction of the joining tubular portion and is brought into engagement with the non-circular inner circumferential surface of the joining tubular portion for transmitting rotational torque of a steering shaft;
a second shaft which comprises a non-circular outer circumferential surface which is inserted into the non-circular inner circumferential surface of the joining tubular portion from the other end in the axial direction of the joining tubular portion and is brought into engagement with the non-circular inner circumferential surface of the joining tubular portion for transmitting the rotational torque of the steering shaft and
a weld joining portion which joins together the second shaft and the joining tubular portion.

2. The steering apparatus as set forth in Claim 1, wherein
the non-circular inner circumferential surface of the joining tubular portion is female serrations and
the non-circular outer circumferential surfaces of the first and second shafts are male serrations, respectively.

3. The steering apparatus as set forth in Claim 1, wherein
the non-circular inner circumferential surface of the joining tubular portion and the non-circular outer circumferential surfaces of the first and second shafts are a pair of flat surfaces which are substantially parallel to each other.

4. The steering apparatus as set forth in Claim 1, further comprising:
a fitting hole which is formed in the joining tubular portion at the other end in the axial direction of the joining tubular portion and
a shaft portion which is formed on the outer circumferential surface of the second shaft so as to tightly fit in the fitting hole.

5. The steering apparatus as set forth in Claim 1, wherein
the first shaft is an intermediate shaft and
the second shaft is an extension shaft.

6. The steering apparatus as set forth in Claim 1, wherein
the first shaft is a pinion shaft and
the second shaft is an extension shaft.
